# EUROPÄISCHE PATENTANMELDUNG

(11) **EP 4 667 332 A1**
(43) Veröffentlichungstag der Anmeldung: **24.12.2025**
(21) Anmeldenummer: 24182822.7
(22) Anmeldetag: 18.06.2024
(51) Int. Cl.: B62D 25/20

(54) **LADEBODEN EINES NUTZFAHRZEUGS UND NUTZFAHRZEUGAUFBAU MIT LADEBODEN**

(71) Anmelder: Schmitz Cargobull AG, 48341 Altenberge (DE)
(72) Erfinder: MAIER, Dr.-Ing. Christof, 41564 Kaarst (DE)
(74) Vertreter: Cohausz & Florack

(57) **Zusammenfassung**

Beschrieben und dargestellt ist ein Ladeboden eines Nutzfahrzeugs (1), insbesondere Lastkraftwagen, Anhänger oder Sattelauflieger, mit einer profilierten Decklage (13) zum Abstellen von Ladung, wobei die Decklage wenigstens bereichsweise ein Grundprofil (14,24) und eine Vielzahl von in dem Grundprofil (24) verteilt angeordneten, das Grundprofil (14,24) nach oben überragenden, eine Überfahrebene (Ü) bildende und parallel zueinander in Längsrichtung (L) des Ladebodens (12,20) ausgerichtete Stegreihen (16,23) bildende Stege (15,22) aufweist, wobei in den Stegreihen (16,23) in Längsrichtung (L) des Ladebodens (12,20) jeweils abwechselnd zueinander Stege (15,22) und Lücken (17) vorgesehen sind, wobei die Stege (15,22) und Lücken (17) benachbarter Stegreihen (16,23) in Längsrichtung (L) des Ladebodens (12,20) derart gegeneinander versetzt angeordnet sind, dass die Lücken (17) zwischen den Stegen (15,22) einer Stegreihe (16,23) in Querrichtung (Q) des Ladebodens (12,20) gesehen jeweils von Stegen (15,22) wenigstens einer angrenzenden Stegreihe (16,23) in Längsrichtung (L) des Ladebodens (12,20) überlappend übergriffen werden und wobei die sich in Querrichtung (Q) des Ladebodens (12,20) gesehen überlappenden Enden (21) der Stege (15,22) in Längsrichtung (L) des Ladebodens (12,20) gesehen wenigstens in einem endständigen Abschnitt eine reduzierte Höhe aufweisen.

## Beschreibung

Die Erfindung betrifft einen Ladeboden eines Nutzfahrzeugs, insbesondere Lastkraftwagen, Anhänger oder Sattelauflieger, mit einer profilierten Decklage zum Abstellen von Ladung, Ferner betrifft die Erfindung einen Nutzfahrzeugaufbau mit einem solchen Ladeboden.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurückblasen.

Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind. Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. Aufgrund der einschaligen Bauweise der Nutzfahrzeugaufbauten werden diese für den sogenannten Trockentransport, aber nur in Ausnahmefällen für den Kühltransport eingesetzt. Nutzfahrzeuge mit entsprechenden Kofferaufbauten, werden auch als Trockenfrachter bezeichnet.

Die zuvor beschriebenen Nutzfahrzeugaufbauten weisen einen Ladeboden auf, der den Laderaum nach unten abschließt und zum Aufstellen von zu transportierender Ladung vorgesehen ist. Während Planenaufbauten häufig von der Seite mit Gabelstaplern be- und entladen werden, können Kofferaufbauten lediglich von hinten beladen werden. Das Beladen eines Nutzfahrzeugaufbaus von hinten erfolgt typischerweise mit Hilfe von Hubwagen, mit denen beispielsweise auf Paletten gesetzte Ladung einfach be- und entladen werden kann. Das Befahren des Nutzfahrzeugaufbaus mit Hubwagen ist jedoch recht geräuschintensiv, weshalb sich zur Verminderung der Geräuschentwicklung sehr ebene Ladeböden etwa aus Holz anbieten. Ladeböden aus Holz erfüllen jedoch in vielen Fällen nicht die hygienischen Anforderungen, die beispielsweise beim Transport von Lebensmitteln zu beachten sind. In solchen Fällen müssen die Ladeböden leicht und zuverlässig, insbesondere feucht, gereinigt werden können. Daher kommen für Lebensmitteltransporte insbesondere Kofferaufbauten mit Ladeböden in Frage deren Decklage aus Aluminium gebildet wird. Um zu vermeiden, dass Personen auf den nassen Ladeböden mit Aluminiumdecklage ausrutschen und sich verletzen, sollten die Ladeböden profiliert sein. Dabei führen jedoch besonders rutschfeste Ladeböden oftmals zu einer besonders großen Geräuschentwicklung beim Beladen der Nutzfahrzeugaufbauten, was zu Beschwerden von Anwohnern und dergleichen führen kann.

Daher liegt der vorliegenden Erfindung die Aufgabe zugrunde, den Ladeboden und den Nutzfahrzeugaufbau jeweils der eingangs genannten und zuvor näher erläuterten Art derart auszugestalten und weiterzuentwickeln, dass ein Beladen mit Hubwagen geräuscharm erfolgen kann, ohne eine erhöhte Rutschgefahr für den Laderaum betretende Personen zu erzeugen.

Diese Aufgabe ist gemäß Anspruch 1 gelöst durch einen Ladeboden eines Nutzfahrzeugs, insbesondere Lastkraftwagen, Anhänger oder Sattelauflieger, mit einer profilierten Decklage zum Abstellen von Ladung, wobei die Decklage wenigstens bereichsweise ein Grundprofil und eine Vielzahl von in dem Grundprofil verteilt angeordneten, das Grundprofil nach oben überragenden, eine Überfahrebene bildende und parallel zueinander in Längsrichtung des Ladebodens ausgerichtete Stegreihen bildende Stegen aufweist, wobei in den Stegreihen in Längsrichtung des Ladebodens jeweils abwechselnd zueinander Stege und Lücken vorgesehen sind, wobei die Stege und Lücken benachbarter Stegreihen in Längsrichtung des Ladebodens derart gegeneinander versetzt angeordnet sind, dass die Lücken zwischen den Stegen einer Stegreihe in Querrichtung des Ladebodens gesehen jeweils von Stegen wenigstens einer angrenzenden Stegreihe in Längsrichtung des Ladebodens überlappend übergriffen werden und wobei die sich in Querrichtung des Ladebodens gesehen überlappenden Enden der Stege in Längsrichtung des Ladebodens gesehen wenigstens in einem endständigen Abschnitt eine reduzierte Höhe aufweisen.

Die genannte Aufgabe ist ferner gemäß Anspruch 15 gelöst durch einen Nutzfahrzeugaufbau, insbesondere Kofferaufbau, mit einem Ladeboden nach einem der Ansprüche 1 bis 14.

Der Ladeboden, der für einen Nutzfahrzeugaufbau eines Nutzfahrzeugs vorgesehen ist, weist zum Zwecke der Rutschhemmung eine profilierte Decklage zum Abstellen von Ladung auf. Bei dem Nutzfahrzeugaufbau handelt es sich aus den zuvor genannten Gründen vorzugsweise um einen Kofferaufbau. Zudem kann es sich bei dem Nutzfahrzeug beispielsweise um einen Lastkraftwagen, einen Anhänger oder einen Sattelauflieger handeln, wobei Letzterer bevorzugt ist. Aufgrund der Länge von Sattelaufliegern kommt den Ladeböden beim Beladen von hinten besondere Bedeutung zu.

Die Decklage umfasst wenigstens bereichsweise ein Grundprofil, das vornehmlich ein Ausrutschen von Personen verhindern soll, und eine Vielzahl von Stegen, die im Grundprofil verteilt angeordnet sind. Die Stege überragen das Grundprofil nach oben und definieren mit den oberen Rändern eine Überfahrebene, in der der Ladeboden beim Befahren mit Hubwagen in Kontakt kommt. Die Hubwagen befahren dann mit ihren Rollen vereinfacht gesprochen den Ladeboden in der Überfahrebene. Mit dem Grundprofil kommen die Räder der Hubwagen dagegen vorzugsweise nicht oder nur sehr bedingt in Kontakt. Um das Befahren der Stege mit den Rollen der Hubwagen zu begünstigen, sind die Stege in der Längsrichtung des Ladebodens ausgerichtet und in dieser Längsrichtung auch zu Stegreihen zusammengefasst.

Die Stege in den Stegreihen sind in der Längserstreckung der Stegreihen voneinander beabstandet vorgesehen. Zwischen zwei Stegen ist typischerweise eine Lücke vorgesehen, welche die benachbarten Stege der Stegreihe auf Abstand hält. Die Lücken erlauben es beispielsweise, dass Wasser nach dem Reinigen des Nutzfahrzeugaufbaus zwischen den Stegen hindurchfließen kann.

Damit die Räder der Hubwagen den Ladeboden jedoch möglichst ausschließlich auf den Stegen in der Überfahrebene befahren, sind die Stege und Lücken benachbarter Stegreihen in Längsrichtung des Ladebodens gegeneinander versetzt angeordnet. Dies ist so vorgesehen, dass die Lücken zwischen den Stegen einer Stegreihe in Querrichtung des Ladebodens gesehen jeweils von Stegen wenigstens einer angrenzenden Stegreihe in Längsrichtung des Ladebodens überlappend übergriffen werden. Die Querrichtung kann vorliegend als eine Richtung quer zur Längserstreckung des Ladebodens und parallel zum Ladeboden verstanden werden. Eine Projektion der Stege der benachbarten Stegreihen in dieser Richtung auf eine Ebene senkrecht zum Ladeboden und parallel zur Längserstreckung des Ladebodens führt mithin zu einer durchgehenden und geraden Linie, welche durch die Oberseiten bzw. Oberkanten der Stege der benachbarten Stegreihen gebildet wird. Im Bereich der Lücken einer Stegreihe rollen die Rollen eines Hubwagens mithin auf den Stegen einer benachbarten Stegreihe ab, so dass die Rollen ohne Höhenversatz weiter entlang der Überfahrebene verfahren werden. Ein Höhenversatz der Rollen zwischen Stegen würde zu einer unnötigen Geräuschentwicklung führen.

Mithin kann der Begriff der benachbarten Stegreihen bedarfsweise recht allgemein verstanden werden. Die benachbarten Stegreihen müssen also nicht zwingend die unmittelbar benachbarten Stegreihen sein. Die benachbarten Stegreihen können auch solche sein, die nahe beieinander, also benachbart, angeordnet sind. Der Abstand zwischen den Stegreihen sollte jedoch nicht größer sein als die Breite einer Rolle eines zum Be- und Entladen geeigneten Hubwagens. Vorzugsweise ist der Abstand der benachbarten Stegreihen kleiner als die hälfte der Breite der entsprechenden Rolle.

Dann kann die Rolle beim Befahren des Ladebodens vorteilhaft stets mit wenigstens zwei Stegen in Kontakt stehen. Mit anderen Worten, es ist möglich, wenngleich nicht unbedingt bevorzugt, wenn unmittelbar benachbarte Stegreihen hinsichtlich der Anordnung der Stege und Lücken nicht gegeneinander versetzt angeordnet sind. Es sollte jedoch eine mittelbar benachbarte Stegreihe existieren, welche entsprechend versetzt ausgebildet ist.

Des Weiteren wird darauf hingewiesen, dass eine Lücke in einer Stegreihe nicht zwingend von einem einzigen Steg einer einzigen benachbarten Stegreihe überbrückt werden muss, auch wenn dies der Einfachheit halber und zum Zwecke der Geräuschdämpfung grundsätzlich bevorzugt sein wird. Denkbar ist beispielsweise, dass drei oder mehr benachbarte Stegreihen in einer Projektion wie zuvor beschrieben zu einer durchgehenden, geraden Linie führen, welche durch die Oberseiten bzw. Oberkanten der Stege der benachbarten Stegreihen gebildet wird. Die Stegreihen sollten aus den genannten Gründen aber nahe beieinander liegen, so dass diese von ein und derselben Rolle eines Hubwagens parallel bzw. gleichzeitig befahren werden können. Dies könnte beispielsweise erreicht werden, indem die Längen der Stege gut einem Drittel der gesamten Länge eines Stegs und einer Lücke entsprechen und jeweils drei benachbarte Stegreihen um jeweils ein Drittel der gesamten Länge eines Stegs und einer Lücke gegeneinander versetzt angeordnet sind.

Es ist nämlich stets vorgesehen, dass sich die Enden der Stege der benachbarten Stegreihen geringfügig überlappen. Die sich in Querrichtung des Ladebodens gesehen überlappenden Enden der Stege weisen in Längsrichtung des Ladebodens gesehen wenigstens in einem endständigen Abschnitt eine reduzierte Höhe auf, so dass eine Art fließender Übergang einer Rolle von einem Steg zum nächsten Steg der benachbarten Stegreihe erzeugt werden kann. Dies kann zu einer signifikanten Reduzierung der Geräuschentwicklung beitragen.

Bei einer ersten besonders bevorzugten Ausgestaltung des Ladebodens weisen die sich in Querrichtung des Ladebodens gesehen überlappenden Enden der Stege der benachbarten Stegreihen in der Längsrichtung des Ladebodens wenigstens im Wesentlichen im gesamten Überlappungsbereich eine reduzierte Höhe auf. Dann kann eine Rolle quasi in dem Moment, in dem der Kontakt zu einem Steg abreißt in Kontakt mit dem überlappenden Steg der benachbarten Stegreihen gelangen, was hinsichtlich des Rollwiderstands und der Geräuschentwicklung zweckmäßig sein kann. Wenn eine Rolle beim Wechseln von einem Steg zum benachbarten nächsten Steg jedoch kurzzeitig Kontakt mit beiden Stegen hat, kann dies hinsichtlich des Rollwiderstands und der Geräuschentwicklung bedarfsweise noch zweckmäßiger sein.

Alternativ oder zusätzlich bietet es sich aber an, wenn die sich überlappenden Enden der Stege in Längsrichtung des Ladebodens gesehen abgeschrägt und/oder abgerundet sind. Dann kann ein quasi fließender Übergang von einem Steg zum nächsten Steg der benachbarten Stegreihe erreicht werden, was die Geräuschentwicklung grundsätzlich verringert.

Einer verringerten Geräuschentwicklung ist es grundsätzlich dienlich, wenn die Rollen eines Hubwagens in der Überfahrebene in Kontakt mit den Stegen aber nicht mit dem Grundprofil dazwischen gelangen. Mithin bietet es sich an, wenn die Stege der Stegreihen das Grundprofil um wenigstens 0,1 mm, vorzugsweise um wenigstens 0,2 mm, nach oben überragen. Damit gleichzeitig eine gute Rutschhemmung erreicht werden kann, bietet es sich weiter an, wenn die Stege der Stegreihen das Grundprofil dazwischen um nicht mehr als 0,4 mm, insbesondere nicht mehr als 0,3 mm, nach oben überragen.

Aus den gleichen Gründen bietet es sich alternativ oder zusätzlich an, wenn die sich überlappenden Enden der Stege wenigstens endständig eine um wenigstens 0,1 mm, vorzugsweise um wenigstens 0,2 mm, reduzierte Höhe aufweisen. Dabei sollte jedoch diese Höhendifferenz einen Wert von vorzugsweise 0,4 mm, insbesondere von 0,3 mm, nicht übersteigen.

Wenn eine Projektion von Stegreihen in einer Querrichtung des Ladebodens in einer Ebene senkrecht zum Ladeboden und parallel zu den Stegreihen einen oberen durchgehenden Rand auf Höhe der Überfahrebene aufweist, können die Rollen eines Hubwagens eben entlang dieser Überfahrebene im Nutzfahrzeugaufbau verfahren werden. Dies trifft umso mehr zu, insbesondere auch für schmalere Rollen, wenn dies für die Projektionen jeweils zweier, vorzugsweise unmittelbar benachbarter, Stegreihen gilt.

Um einfach ein wirksames rutschhemmendes Grundprofil bereitstellen zu können, kann es sich anbieten, wenn das Grundprofil aus gleichartigen rechteckigen oder quadratischen Profilelementen zusammengesetzt ist. Diese werden dann bedarfsweise hinsichtlich der Rutschhemmung angepasst und können dann gleichartig wiederholend vorgesehen werden, um bedarfsweise eine große Fläche des Ladebodens damit zu belegen. Die Anordnung der Profilelemente zu einem großflächigen Grundprofil ist einfach und zweckmäßig möglich, wenn die Profilelemente jeweils in parallelen Profilelementreihen hintereinander angeordnet sind.

Dabei bietet es sich aus Sicht der Rutschhemmung des Ladebodens in unterschiedlichen Richtungen an, wenn die Profilelementreihen schräg zu den Stegreihen ausgerichtet sind. Gute Ergebnisse hinsichtlich der praktischen Rutschhemmung werden beispielsweise erreicht, wenn die Profilelementreihen einen Winkel zu den Stegreihen von zwischen 30° bis 60°, vorzugsweise von zwischen 40° und 50°, einschließen.

Der Rutschhemmung ist es zudem zuträglich, wenn die Profilelemente benachbarter Profilelementreihen in Längsrichtung der Profilelementreihen gegeneinander versetzt angeordnet sind. Dies lässt sich einfach und zweckmäßig erreichen, wenn die Profilelemente der benachbarten Profilelementreihen in der Längsrichtung der Profilelementreihen um zwischen einem Drittel und zwei Dritteln, insbesondere um wenigstens im Wesentlichen die Hälfte, der Längenerstreckung der Profilelemente in Richtung der Profilelementreihen gegeneinander versetzt angeordnet sind.

Um die gewünschten rutschhemmenden Eigenschaften für unterschiedliche Szenarien einfach und zweckmäßig bereitstellen zu können, bietet es sich an, wenn sich wenigstens im Wesentlichen jedes Profilelement aus mehreren, vorzugsweise zwei, drei oder vier, Teilprofilen zusammensetzt. Die einzelnen Teilprofile haben dann unterschiedliche Eigenschaften, die sich dann aber auf der kleinen Fläche im Bereich eines Teilprofil ergänzen, was die Sicherheit der den Laderaum betretenden Personen erhöhen kann. Die Anzahl der Teilprofile kann dabei auf ein Mindestmaß reduziert sein, um die unterschiedlichen Szenarien zuverlässig abzudecken. Zur Vereinfachung der Ladebodenfertigung kann es sich alternativ oder zusätzlich anbieten, wenn wenigstens im Wesentlichen jedes Profilelement zwei oder drei unterschiedlich profilierte, insbesondere abwechselnd zueinander angeordnete, Teilprofile aufweist.

Dem besseren Abfluss von Flüssigkeit kann es dienlich sein, wenn zwischen den Stegreihen jeweils wenigstens eine wenigstens im Wesentlichen durchgehende, sich in Längsrichtung des Ladebodens erstreckende Rille vorgesehen ist. Der Abfluss von Feuchtigkeit kann noch erhöht werden, wenn zwischen den Stegreihen jeweils zwei oder drei Rillen vorgesehen sind, die sich in Längsrichtung des Ladebodens erstrecken und in Längserstreckung des Ladebodens wenigstens im Wesentlichen durchgehend vorgesehen sind.

Alternativ oder zusätzlich lässt sich der Ablauf von Flüssigkeit und die Rutschhemmung positiv beeinflussen, wenn die Profilelemente wenigstens im Wesentlichen vollständig von einer Rille umfasst sind. Die Rillen um die Profilelemente können dann eine Art Rillensystem bilden, welches um die Rillen in Längsrichtung des Ladebodens erweitert sein kann. Analog zu den Profilelementen können auch die Teilprofile wenigstens im Wesentlich vollständig von einer Rille umfasst sein. Dies dient ebenfalls der Ausbildung eines Rillensystems zum Ablauf von Flüssigkeit und zur Rutschhemmung des Ladebodens. Wenn die Profilelemente und die Teilprofile wenigstens im Wesentlichen vollständig von Rillen umfasst sind, können die Profilelemente und die Teilprofile der Einfachheit halber wenigstens abschnittsweise umlaufend um die Profilelemente mit einer gemeinsamen Rille umfasst sein. In diesen Abschnitten kann mithin ein und dieselbe Rille die Rille um ein Profilelement und die Rille um das Teilprofil bilden. Dies kann zu einer besseren Ableitung von Flüssigkeit aus dem Laderaum sorgen.

Flüssigkeit kann besonders rasch und zuverlässig aus dem Laderaum abfließen, wenn die Rillen in Längsrichtung des Ladebodens, die die Profilelemente umfassenden Rillen und/oder die die Teilprofile umfassenden Rillen Rillenböden aufweisen, die auf wenigstens im Wesentlichen der gleichen Höhe im Ladeboden vorgesehen sind. Der Rillenboden einer Rille wird hier im Sinne der Unterseite der inneren Kontur der Rille verstanden, wobei die Höhe des Rillenbodens der Rille gleichsam die Tiefe der Rille im Ladeboden bestimmt. Wenn wenigstens zwei der oben aufgezählten Rillen Rillenböden mit gleichen Höhen aufweisen, kann Flüssigkeit von einer Rille in die nächste Rille fließen, ohne dass dies durch eine Stufe zwischen den Rillenböden der Rillen beeinträchtigt wird. Infolgedessen kann Flüssigkeit in Gänze aus dem Laderaum laufen, ohne teilweise durch entsprechende Stufen zurückgehalten zu werden.

Das Grundprofil muss sich nicht in gleichartiger Weise über die gesamte Fläche des Ladebodens erstrecken. Es kann auch vorgesehen sein, dass wenigstens zwei separate, ein Grundprofil umfassende Grundprofilbereiche mit Stegreihen vorgesehen und voneinander beabstandet sind. Die Grundprofilbereiche können auch unterschiedliche Grundprofile aufweisen, selbst wenn dies fertigungstechnisch vielfach eher weniger bevorzugt sein wird. Zwischen den Grundprofilbereichen können Funktionsbereiche mit gegenüber dem Grundprofil oder gegenüber den Grundprofilen abweichender Funktionsprofilierung vorgesehen sein. Im Falle von mehreren Funktionsbereichen können diese unterschiedliche Funktionsprofilierungen aufweisen. Zwingend ist dies jedoch nicht. Es können auch mehrere Funktionsbereiche gleichartige Funktionsprofilierungen aufweisen. Die Funktionsbereiche können beispielsweise zum Aufstellen und Verspannen von Spannstangen zur Ladungssicherung vorgesehen sein. Die Funktionsprofilierungen sind dann für einen hinreichenden Formschluss mit den Sohlen der Spannstangen ausgebildet.

Beispielsweise zur flexiblen Aufnahme von Spannstangen kann es der einfachen Fertigung des Ladebodens halber zweckmäßig sein, wenn der wenigstens eine Funktionsbereich in Längsrichtung des Ladebodens ausgerichtet ist. Dies gilt umso mehr, wenn sich der wenigstens eine Funktionsbereich über die wenigstens im Wesentlichen gesamte Längserstreckung des Ladebodens erstreckt.

Der Ladeboden lässt sich zudem einfach, schnell und präzise fertigen, wenn das Profil des Ladebodens mittels einer Prägewalze in die Oberfläche des Ladebodens eingeprägt wird. Das genannte Profil kann dabei das wenigstens eine Grundprofil, die Stegreihen und/oder die wenigstens eine Funktionsprofilierung umfassen. Besonders einfach ist es, wenn die ein Bereich des Ladebodens nur einmal mit einer Prägewalze geprägt werden muss, um die gewünschte Oberflächenstruktur herzustellen. Weitere Profilierungsschritte sind dann entbehrlich.

Um ein Prägen des Ladebodens zu vereinfachen, kann die Decklage des Ladebodens aus Aluminium gebildet sein. Eine Decklage aus Aluminium bietet aber auch unabhängig von einem möglichen Prägen des Ladebodens einen hygienischen Vorteil, da Decklagen aus Aluminium gut gereinigt werden können. Dies kann alleine mit Wasser oder auch mit einer Reinigungslösung erfolgen, wozu sich bedarfsweise eines Hochdruckreinigers bedient werden kann.

Nachfolgend wird die Erfindung anhand einer lediglich Ausführungsbeispiele darstellenden Zeichnung näher erläutert. In der Zeichnung zeigt
- Fig. 1: ein Nutzfahrzug mit einem erfindungsgemäßen Nutzfahrzeugaufbau in einer schematischen, perspektivischen Ansicht,
- Fig. 2: ein Detail des erfindungsgemäßen Ladebodens des Nutzfahrzeugaufbaus aus Fig. 1 in einer schematischen Draufsicht,
- Fig. 3: ein weiteres Detail des Ladebodens aus Fig. 2 in einer schematischen, perspektivischen Ansicht,
- Fig. 4A-B: Details eines zweiten erfindungsgemäßen Ladebodens in schematischen Draufsichten und
- Fig. 5: ein Detail eines dritten erfindungsgemäßen Ladebodens in einer schematischen Draufsicht.

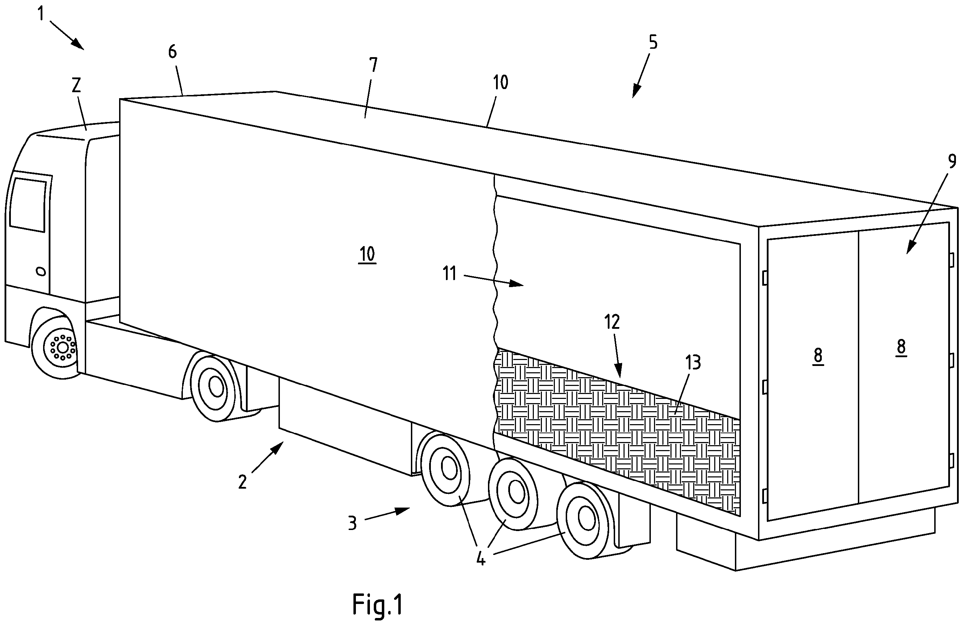

In der Fig. 1 ist ein von einer Zugmaschine Z gezogenes Nutzfahrzeug 1 in Form eines Sattelaufliegers dargestellt. Das Nutzfahrzeug 1 umfasst ein Chassis 2 und ein daran befestigtes Fahrwerk 3 umfassend drei Achsen 4. Von dem Chassis 2 wird zudem ein Nutzfahrzeugaufbau 5 in Form eines Kofferaufbaus mit einer festen Stirnwand 6, einem festen Dach 7, festen Rückwandtüren 8 an einer Rückwand 9 und festen Seitenwänden 10 getragen. Die Stirnwand 6, die Seitenwände 10 und das Dach 7 werden durch Paneele gebildet, welche eine äußere Decklage und eine innere Decklage aufweisen, zwischen denen eine Kernlage aus einem geschäumten Kunststoff vorgesehen ist. Bei der inneren Decklage und der äußeren Decklage handelt es sich um strukturgebende Decklagen, die auch jeweils mehrlagig ausgebildet sein können. Die vorliegenden Decklagen können eine Schicht aus Aluminium, Stahl oder faserverstärktem Kunststoff aufweisen. Die Kernlage dient dabei primär der thermischen Isolierung eines im Nutzfahrzeugaufbau 5 vorgesehenen Laderaums 11.

Der Laderaum 11 des Nutzfahrzeugaufbaus 5 ist an seiner Unterseite durch einen Ladeboden 12 zum Aufstellen von Ladung begrenzt. Dazu weist der Ladeboden 12 an seiner Oberseite eine Decklage 13 auf. Unter der Decklage 13 kann eine Tragschicht insbesondere umfassend Querträger und/oder Längsträger vorgesehen sein, die zum Zwecke der thermischen Insolation als Kernschicht des Ladebodens 12 ausgebildet sein kann. Die Räume zwischen den Quer- und/oder Längsträgern können dann vorzugsweise wenigstens im Wesentlichen vollständig mit einem geschäumten Kunststoff ausgefüllt sein. Der Ladeboden 12 weist dann unterhalb der Kernschicht vorzugsweise eine Außenlage auf, um ein Eindringen von Feuchtigkeit in die Kernschicht des Ladebodens 12 zu vermeiden. Auf den tatsächlichen Aufbau des Ladebodens 12 unterhalb der Decklage 13 kommt es vorliegend aber allenfalls untergeordnet an.

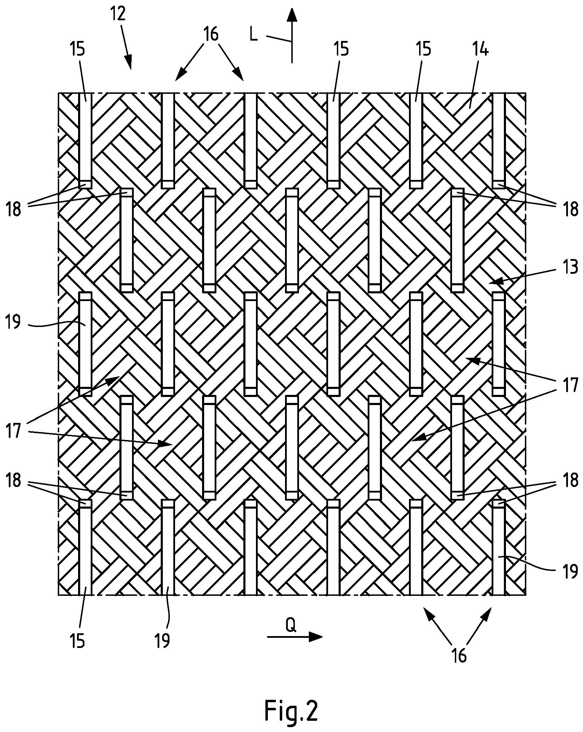

Die im Detail in der Fig. 2 dargestellte Decklage 13 des Ladebodens 12 umfasst ein großflächiges Grundprofil 14, das sich bei dem dargestellten und insoweit bevorzugten Ladeboden 12 wenigstens im Wesentlichen über den gesamten Ladeboden 12 erstreckt. In dem Grundprofil 14 sind zudem Stege 15 verteilt vorgesehen, die sich jeweils wenigstens im Wesentlichen in der Längsrichtung L des Ladebodens 12 erstrecken und das Grundprofil 14 nach oben überragen. Die Oberseiten der Stege 15 sind dabei so zueinander angeordnet, dass sie eine Überfahrebene Ü definieren, in der die Rollen vom Hubwagen die Decklage 13 überfahren können. Die Rollen rollen dabei an den Oberseiten der Stege 15, nicht aber an dem Grundprofil 14 ab. Die Stege 15 bilden in Längsrichtung L des Ladebodens 12 gesehen eine Vielzahl von Stegreihen 16, wobei zwischen den Stegen 15 einer jeden Stegreihe 16 Lücken 17 vorgesehen sind, welche die Stege 15 der Stegreihen 16 untereinander auf Abstand halten. Die Anordnung der Stege 15 und Lücken 17 der benachbarten Stegreihen 16 ist jeweils versetzt zueinander vorgesehen. Auf der Höhe einer Lücke 17 einer Stegreihe 16 befindet sich bei der unmittelbar benachbarten Stegreihe 16 ein Steg 15, der mit den angrenzend zu der entsprechenden, zuvor angesprochenen Lücke 17 der Stegreihe 16 vorgesehenen Stege 15 in Längsrichtung L des Ladebodens 12 überlappt.

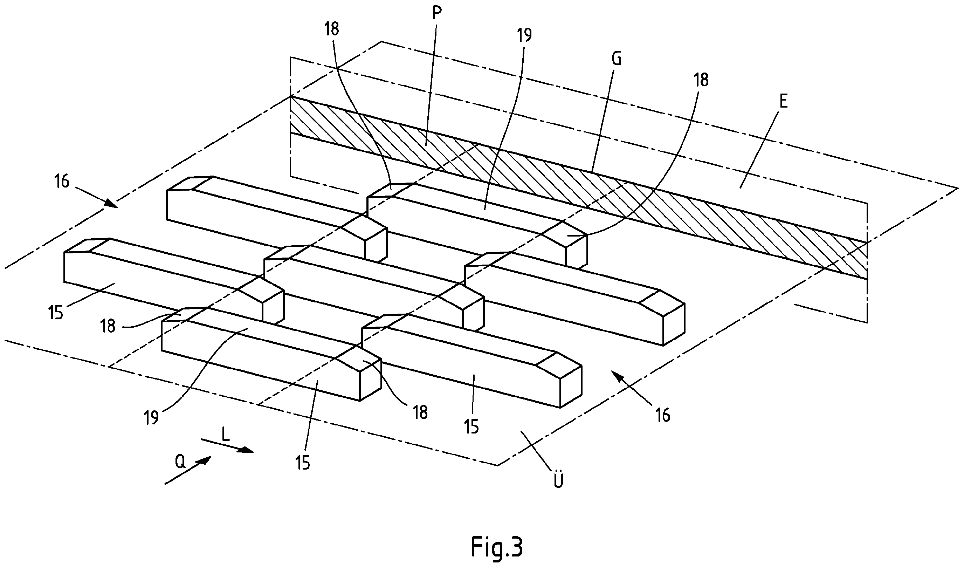

Dies ist insbesondere in der Fig. 3 dargestellt, in der einige Stege 15 benachbarter Stegreihen 16 ohne das Grundprofil 14 in einer perspektivischen Ansicht dargestellt sind. Der in Querrichtung Q zu einer Lücke 17 einer Stegreihe 16 vorgesehene Steg 15 der unmittelbar angrenzenden Stegreihe 16 übergreift mithin nicht nur die Lücke 17 in Längsrichtung L des Ladebodens 12 gesehen, sondern auch abschnittsweise die beiden sich in Längsrichtung L des Ladebodens 12 an die Lücke 17 anschließenden Stege 15 derselben Stegreihe 16. Die entsprechend in Querrichtung Q des Ladebodens 12 gesehen in Längsrichtung L des Ladebodens 12 überlappenden Enden 18 der Stege 15 benachbarter Stegreihen 16 weisen jeweils wenigstens abschnittsweise eine reduzierte Höhe auf. In den Abschnitten der Stege 15, in denen sie die Lücken 17 angrenzender Stegreihen 16 in Längsrichtung L des Ladebodens 12 übergreifen, weisen die Stege 15 dagegen keine reduzierte Höhe auf.

Die Höhe der Stege 15 ist in diesem Bereich zudem vorzugsweise wenigstens im Wesentlichen konstant. Die Oberseiten der Stege 15 in diesem Bereich definieren mithin die Überfahrebene Ü für die Rollen von Hubwagen. Dabei sind die Abstände der unmittelbar benachbarten Stegreihen 16 in Querrichtung Q des Ladebodens 12 vorzugsweise deutlich kleiner als die Breite der zum Befahren des Ladebodens 12 vorgesehenen Rollen. Die einander in Längsrichtung L des Ladebodens 12 überlappenden Enden 18 der in Querrichtung Q benachbarten Stege 15 sind bei dem dargestellten Ladeboden 12 nach außen abgeschrägt. Die überlappenden Enden 18 könnten aber beispielsweise auch abgerundet sein.

Zudem wäre es nicht erforderlich, dass die überlappenden Enden 18 wie dargestellt über ihre gesamte Länge der Überlappung eine verringerte Höhe aufweisen, auch wenn dies bevorzugt sein kann. Der Höhenunterschied zwischen den Stegen 15 zwischen den einander überlappenden Enden 18 und dem Grundprofil 14 beträgt bei dem dargestellten und insoweit bevorzugten Ladeboden 12 etwa 0,2 mm. Zudem besteht ein Höhenunterschied zwischen der Mitte der Stege 15 und deren in Längsrichtung gesehen äußeren Enden 18 von ebenfalls 0,2 mm.

Wie sich aus der Fig. 3 ebenfalls ergibt, können die Stege 15 in einer Querrichtung Q quer zur Längserstreckung L der Stegreihen 16 und parallel zur Decklage 13 auf eine Ebene E senkrecht zur Richtung der Projektion P projiziert werden. In der Projektion P bilden dann die Oberseiten 19 der Stege der Stegreihen 16 einen oberen durchgehenden Rand auf Höhe der Überfahrebene Ü. Die einander überlappenden Enden 18 sind jeweils unterhalb dieser Überfahrebene Ü angeordnet. Bei dem dargestellten und insoweit bevorzugten Ladeboden 12 ergibt sich eine entsprechende, durchgehende und gerade Linie G in der Projektion P, nicht nur im Falle einer Projektion P von mehreren oder vielen Stegreihen 16 in der Querrichtung Q, sondern bereits bei der Projektion P, insbesondere jeweils, zweier unmittelbar benachbarter Stegreihen 16 in eine Ebene E der Projektion P senkrecht zur Decklage 13 und parallel zu den Stegreihen 16.

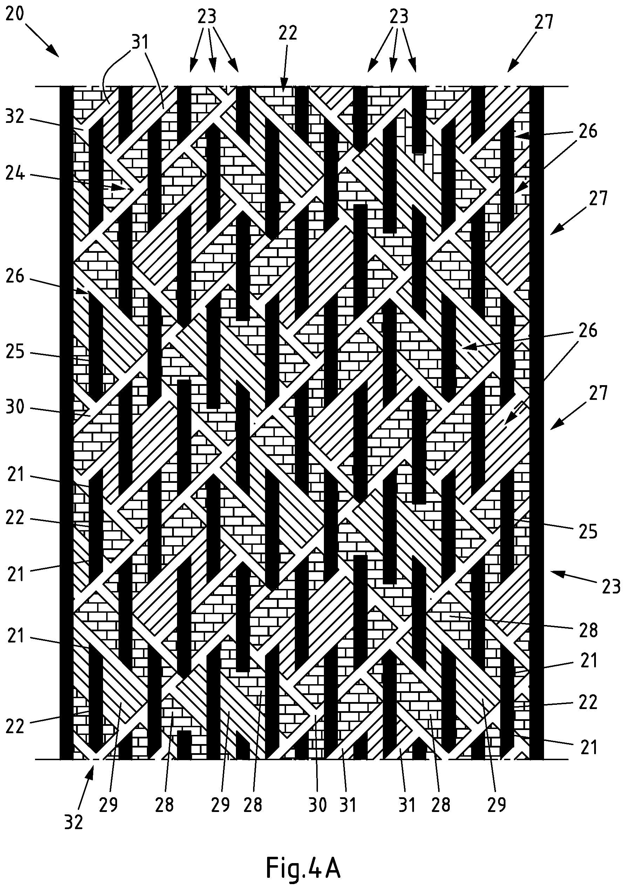

In der Fig. 4A ist ein Detail eines anderen Ladebodens 20 dargestellt. Der Ladeboden 20 unterscheidet sich jedoch bedarfsweise lediglich hinsichtlich der Ausgestaltung der Enden 21 der Stege 22 der Stegreihen 23 und hinsichtlich der Ausgestaltung des Grundprofils 24, das wie bei dem zuvor beschriebenen Ladeboden 20 um etwa 0,2 mm unterhalb der Oberseiten 25 der Stege 22 der Stegreihen 23 angeordnet ist. Die Stege 22 der Stegreihen 23 entsprechen prinzipiell den Stegen 15 der Stegreihen 16 des Ladebodens 12 gemäß Fig. 2, jedoch mit dem Unterschied, dass die Enden 21 der Stege 22 teilweise nicht quer, sondern schräg zur Längserstreckung L der Stege 22 verlaufen. Der Winkel der Enden 21 zur Längsrichtung L der Stege 22 bzw. Stegreihen 23 beträgt dabei wenigstens im Wesentlichen 45°, wobei die Enden 21 der Stege zu unterschiedlichen Seiten schräg verlaufen können.

Das Grundprofil 24 des Ladebodens 20 gemäß Fig. 4A setzt sich aus quadratischen, gleichartigen Profilelementen 26 zusammen, wobei die Profilelemente 26 jeweils in Profilelementreihen 27 hintereinander angeordnet sind. Die hintereinander angeordneten Profilelemente 26 einer Reihe von Profilelementen 26 sind jeweils um 90° zu dem vorhergehenden und nachfolgenden Profilelement 26 gedreht angeordnet. Die Ausgestaltung der Profilelemente 26 untereinander unterscheidet sich ansonsten jedoch nicht oder allenfalls geringfügig.

Zudem sind die Profilelementreihen 27 schräg zu den Stegreihen 23 ausgerichtet. Bei dem dargestellten und insoweit bevorzugten Ladeboden 20 beträgt der Winkel zwischen den Stegreihen 23 und den Profilelementreihen 27 wenigstens im Wesentlichen 45°. Die Profilelemente 26 unmittelbar benachbarter Profilelementreihen 27 sind ferner nicht deckungsgleich nebeneinander vorgesehen. Vielmehr sind die Profilelemente 26 von benachbarten Profilelementreihen 27 gegeneinander versetzt angeordnet. Der entsprechende Versatz zwischen den Profilelementen 26 benachbarter Profilelementreihen 27 beträgt bei dem dargestellten und insoweit bevorzugten Ladeboden 20 eine halbe Seitenlänge der Profilelemente 26 in Längsrichtung der Profilelementreihe 27.

Jedes der Profilelemente 26 ist gleichartig aufgebaut und umfasst drei separate Teilprofile 28,29, von denen sich zwei der Teilprofile 28 einander entsprechen. Die Teilprofile 28,29 sind länglich ausgebildet und parallel zu ihren Längsseiten nebeneinander vorgesehen. Dabei sind die beiden gleichartigen Teilprofile 28 eines Profilelements 26 außen und das andersartige Teilprofil 29 dazwischen vorgesehen. Die gleichartigen Teilprofile 28 weisen eine Reihe von Profilzähnen auf, während das andersartige Teilprofil 29 längliche Rippen aufweist. Zudem sind umlaufend um die Teilprofile 28,29 und umlaufend um die Profilelemente 26 Rillen 30,31 vorgesehen, die ein gemeinsames Rillensystem 32 bilden. Dabei werden die umlaufend um die Profilelemente 26 vorgesehenen Rillen 30 durch die umlaufend um die Teilprofile vorgesehenen Rillen 31 gebildet. Die Rillen 30,31 sind zudem nicht abgeschlossen, sondern gehen in angrenzende Rillen 30,31 angrenzender Profilelemente 26 über. Die Rillen 30,31 bilden mithin ein Rillensystem 32 mit untereinander verbundenen Rillen 30,31 aus. Der Rillenboden der Rillen 30,31 befindet sich dabei stets auf demselben Höhenniveau, so dass die einzelnen Rillen 30,31 ohne Stufen ineinander übergehen.

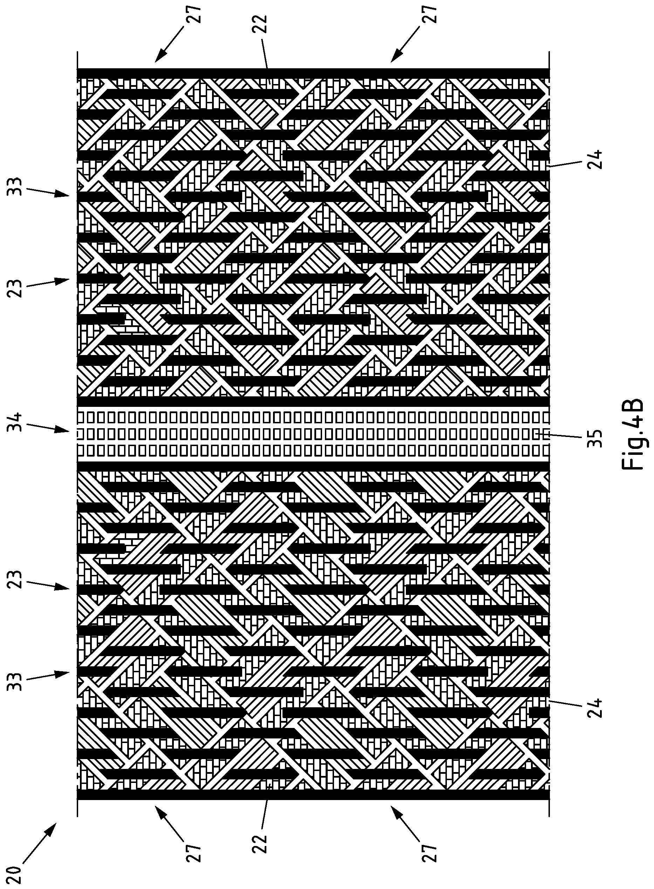

In der Fig. 4B ist ein größerer Abschnitt des Ladebodens 20 als in der Fig. 4A dargestellt. Der Ladeboden 20 umfasst zwei separate, das gleiche Grundprofil 24 aufweisende Grundprofilbereiche 33, die links und rechts dargestellt sind. Dazwischen ist ein Funktionsbereich 34 mit einer Funktionsprofilierung 35 dargestellt. Die Funktionsprofilierung 35 ist dabei so ausgebildet, dass die Funktionsprofilierung 35 einen Formschluss mit Sohlen von Spannstangen bilden kann, die zum Aufsetzen auf den Funktionsbereich 34 und Verspannen mit dem Funktionsbereich 34 vorgesehen sind, um Ladungssicherung im Nutzfahrzeugaufbau betreiben zu können. Der Funktionsbereich 34 ist in Längsrichtung L des Ladebodens 20 ausgerichtet und erstreckt sich über wenigstens im Wesentlichen die gesamte Längserstreckung des Ladebodens 20.

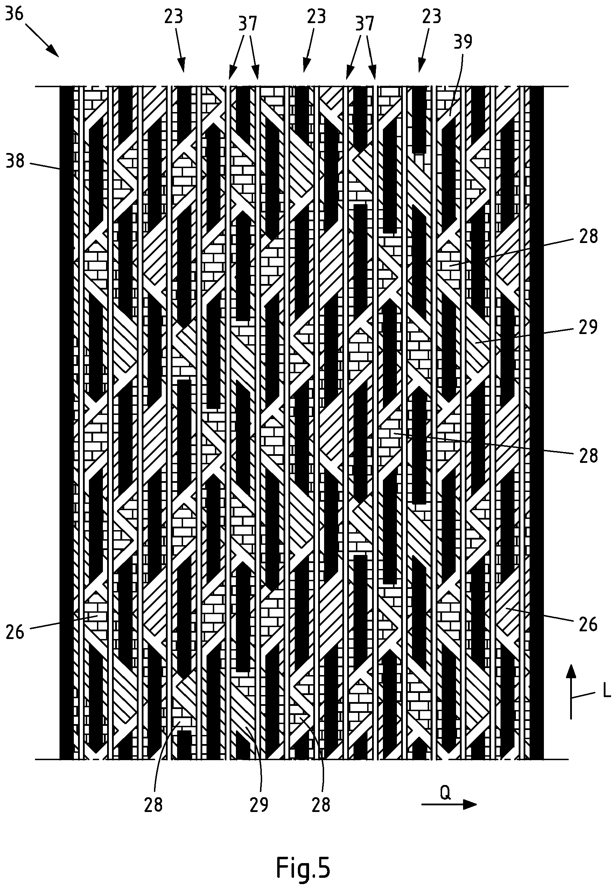

In der Fig. 5 ist ein weiterer Ladeboden 36 dargestellt, der grundsätzlich dem Ladeboden 20 gemäß Fig. 4A-B entspricht. Der einzige Unterschied zwischen den beiden Ladeböden 20,36 besteht darin, dass bei dem Ladeboden 36 gemäß Fig. 5 zwischen den Stegreihen 23 jeweils eine Rille 37 in Längsrichtung L des Ladebodens 36 und parallel zu den Stegreihen 23 vorgesehen ist. Es können bedarfsweise zwischen jeweils zwei Stegreihen 23 auch mehrere Rillen 37 vorgesehen sein. Zudem kann zwischen zwei Stegreihen 23 eine andere Anzahl an Rillen 37 vorgesehen sein als zwischen zwei anderen, insbesondere angrenzenden, Stegreihen 23.

Der besseren Übersichtlichkeit halber sind die sich zwischen den Stegreihen 23 in Längsrichtung L des Ladebodens 20 erstreckenden Rillen 37 mit äußeren durchgezogenen Linien dargestellt. Tatsächlich gehen die in Längsrichtung L des Ladebodens 36 verlaufenden Rillen 37 in gleicher Weise stufenlos in die die Profilelemente 26 und die Teilprofile 28,29 umgreifenden Rillen 30,31 über wie die die Profilelemente 26 und die Teilprofile 28,29 umgreifenden Rillen 30,31 untereinander. Zudem sind die Rillenböden, also Unterseiten, all dieser Rillen 30,31,37 auf demselben Höhenniveau in der Decklage 38 vorgesehen. Flüssigkeit wie Wasser kann von einer Rille 30,31,37 in die angrenzende Rille 30,31,37 fließen, ohne dabei eine Stufe überwinden zu müssen, so dass bereichsweise gar nicht oder wenigstens kaum zwischen einer Rille 30,31,37 und der daran angrenzenden Rille 30,31,37 unterschieden werden kann. Die unterschiedlichen Rillen 30,31,37 bilden ein gemeinsames Rillensystem 39.

### Bezugszeichenliste

| | | | |
|---|---|---|---|
| 1 | Nutzfahrzeug | 24 | Grundprofil |
| 2 | Chassis | 25 | Oberseite |
| 3 | Fahrwerk | 26 | Profilelement |
| 4 | Achse | 27 | Profilelementreihe |
| 5 | Nutzfahrzeugaufbau | 28 | Teilprofil |
| 6 | Stirnwand | 29 | Teilprofil |
| 7 | Dach | 30 | Rille |
| 8 | Rückwandtür | 31 | Rille |
| 9 | Rückwand | 32 | Rillensystem |
| 10 | Seitenwand | 33 | Grundprofilbereich |
| 11 | Laderaum | 34 | Funktionsbereich |
| 12 | Ladeboden | 35 | Funktionsprofilierung |
| 13 | Decklage | 36 | Ladeboden |
| 14 | Grundprofil | 37 | Rille |
| 15 | Steg | 38 | Decklage |
| 16 | Stegreihe | 39 | Rillensystem |
| 17 | Lücke | E | Ebene |
| 18 | Ende | G | Linie |
| 19 | Oberseite | P | Projektion |
| 20 | Ladeboden | L | Längsrichtung |
| 21 | Ende | Q | Querrichtung |
| 22 | Steg | Ü | Überfahrebene |
| 23 | Stegreihe | Z | Zugmaschine |

## Patentansprüche

1. Ladeboden eines Nutzfahrzeugs (1), insbesondere Lastkraftwagen, Anhänger oder Sattelauflieger, mit einer profilierten Decklage (13) zum Abstellen von Ladung, wobei die Decklage wenigstens bereichsweise ein Grundprofil (14,24) und eine Vielzahl von in dem Grundprofil (24) verteilt angeordneten, das Grundprofil (14,24) nach oben überragenden, eine Überfahrebene (Ü) bildende und parallel zueinander in Längsrichtung (L) des Ladebodens (12,20) ausgerichtete Stegreihen (16,23) bildende Stege (15,22) aufweist, wobei in den Stegreihen (16,23) in Längsrichtung (L) des Ladebodens (12,20) jeweils abwechselnd zueinander Stege (15,22) und Lücken (17) vorgesehen sind, wobei die Stege (15,22) und Lücken (17) benachbarter Stegreihen (16,23) in Längsrichtung (L) des Ladebodens (12,20) derart gegeneinander versetzt angeordnet sind, dass die Lücken (17) zwischen den Stegen (15,22) einer Stegreihe (16,23) in Querrichtung (Q) des Ladebodens (12,20) gesehen jeweils von Stegen (15,22) wenigstens einer angrenzenden Stegreihe (16,23) in Längsrichtung (L) des Ladebodens (12,20) überlappend übergriffen werden und wobei die sich in Querrichtung (Q) des Ladebodens (12,20) gesehen überlappenden Enden (21) der Stege (15,22) in Längsrichtung (L) des Ladebodens (12,20) gesehen wenigstens in einem endständigen Abschnitt eine reduzierte Höhe aufweisen.

2. Ladeboden nach Anspruch 1,
**dadurch gekennzeichnet, dass** die sich in Querrichtung (Q) des Ladebodens (12,20) gesehen überlappenden Enden der Stege (15,22) in Längsrichtung (L) des Ladebodens (12,20) gesehen wenigstens im Wesentlichen im gesamten Überlappungsbereich eine reduzierte Höhe aufweisen und/oder dass die Enden der Stege (15,22) in Längsrichtung (L) des Ladebodens (12,20) gesehen abgeschrägt und/oder abgerundet sind.

3. Ladeboden nach Anspruch 1 oder 2,
**dadurch gekennzeichnet, dass** die Stege (15,22) der Stegreihen (16,23) das Grundprofil (14,24) um wenigstens 0,1 mm, vorzugsweise um wenigstens 0,2 mm, und vorzugsweise um höchstens 0,4 mm, insbesondere um wenigstens 0,3 mm, nach oben überragen.

4. Ladeboden nach einem der Ansprüche 1 bis 3,
**dadurch gekennzeichnet, dass** die sich überlappenden Enden (21) der Stege (15,22) wenigstens endständig eine um wenigstens 0,1 mm, vorzugsweise um wenigstens 0,2 mm, und vorzugsweise um höchstens 0,4 mm, insbesondere um wenigstens 0,3 mm, reduzierte Höhe aufweisen.

5. Ladeboden nach einem der Ansprüche 1 bis 4,
**dadurch gekennzeichnet, dass** eine Projektion (P) von Stegreihen (16,23) in einer Querrichtung (Q) des Ladebodens (12,20) aufeinander einen oberen durchgehenden Rand auf Höhe der Überfahrebene (Ü) aufweist und dass, vorzugsweise, die Projektionen (P) jeweils zweier benachbarter Stegreihen (16,23) aufeinander einen oberen durchgehenden Rand auf Höhe der Überfahrebene (Ü) bilden.

6. Ladeboden nach einem der Ansprüche 1 bis 5,
**dadurch gekennzeichnet, dass** das Grundprofil (24) aus gleichartigen rechteckigen oder quadratischen Profilelementen (26) zusammengesetzt ist und dass, vorzugsweise, die Profilelemente (26) in parallelen Profilelementreihen (27) hintereinander angeordnet sind.

7. Ladeboden nach Anspruch 6,
**dadurch gekennzeichnet, dass** die Profilelementreihen (27) schräg zu den Stegreihen (23) ausgerichtet sind und dass, vorzugsweise, die Profilelementreihen (27) einen Winkel zu den Stegreihen (23) von zwischen 30° bis 60°, vorzugsweise von zwischen 40° und 50° einschließen.

8. Ladeboden nach Anspruch 6 oder 7,
**dadurch gekennzeichnet, dass** die Profilelemente (26) benachbarter Profilelementreihen (27) in Längsrichtung der Profilelementreihen (27) gegeneinander versetzt angeordnet sind und dass, vorzugsweise, die Profilelemente (26) der benachbarten Profilelementreihen (27) in der Längsrichtung der Profilelementreihen (27) um zwischen einem Drittel und zwei Dritteln, insbesondere um wenigstens im Wesentlichen die Hälfte, der Längenerstreckung der Profilelemente (26) in Richtung der Profilelementreihen (27) gegeneinander versetzt angeordnet sind.

9. Ladeboden nach Anspruch 8,
**dadurch gekennzeichnet, dass** sich wenigstens im Wesentlichen jedes Profilelement (26) aus mehreren, vorzugsweise zwei, drei oder vier, Teilprofilen (28,29) zusammensetzt und dass, vorzugsweise, wenigstens im Wesentlichen jedes Profilelement (26) zwei oder drei unterschiedlich profilierte, insbesondere abwechselnd zueinander angeordnete, Teilprofile (28,29) aufweist.

10. Ladeboden nach einem der Ansprüche 1 bis 9,
**dadurch gekennzeichnet, dass** zwischen den Stegreihen (23) wenigstens eine, vorzugsweise zwei oder drei, wenigstens im Wesentlichen durchgehende, sich in Längsrichtung (L) des Ladebodens (20) erstreckende Rillen (37) vorgesehen sind.

11. Ladeboden nach einem der Ansprüche 6 bis 10,
**dadurch gekennzeichnet, dass** die Profilelemente (26) und/oder die Teilprofile (28,29) wenigstens im Wesentlich vollständig von einer Rille (30,31) umfasst sind und dass, vorzugsweise, die Profilelemente (26) und die Teilprofile (28,29) wenigstens abschnittsweise umlaufend um die Profilelemente (26) mit einer gemeinsamen Rille (30,31) umfasst sind.

12. Ladeboden nach Anspruch 11,
**dadurch gekennzeichnet, dass** die Böden der Rillen (37) in Längsrichtung (L) des Ladebodens (20) und/oder der die Profilelemente (26) umfassenden Rillen (30) und/oder der die Teilprofile (28,29) umfassenden Rillen (30,31) auf wenigstens im Wesentlichen der gleichen Höhe im Ladeboden (20) vorgesehen sind.

13. Ladeboden nach einem der Ansprüche 6 bis 12,
**dadurch gekennzeichnet, dass** wenigstens zwei separate ein Grundprofil (24) umfassende Grundprofilbereiche (33) mit Stegreihen (23) vorgesehen sind und dass zwischen den wenigstens zwei Grundprofilbereichen (33) wenigstens ein Funktionsbereich (34) mit einer gegenüber dem Grundprofil (24) abweichenden Funktionsprofilierung (35) vorgesehen ist.

14. Ladeboden nach Anspruch 13,
**dadurch gekennzeichnet, dass** der wenigstens eine Funktionsbereich (34) in Längsrichtung (L) des Ladebodens (12,20) ausgerichtet ist und dass, vorzugsweise, sich der wenigstens eine Funktionsbereich (34) über die wenigstens im Wesentlichen gesamte Längserstreckung des Ladebodens (20) erstreckt.

15. Nutzfahrzeugaufbau (5), insbesondere Kofferaufbau, mit einem Ladeboden nach einem der Ansprüche 1 bis 14.
